# EUROPEAN PATENT APPLICATION

(11) **EP 4 609 957 A1**
(43) Date of publication of application: **03.09.2025**
(21) Application number: 24159996.8
(22) Date of filing: 27.02.2024
(51) Int. Cl.: B05B 1/30, F16K 3/00, B05B 9/01, B05B 12/00

(54) **VALVE ASSEMBLY FOR A WATER SPRAYER EQUIPMENT AND WATER SPARYER EQUIPMENT**

(71) Applicant: Husqvarna AB, 561 82 Huskvarna (SE)
(72) Inventor: Renner, Thomas, 89079 Ulm (DE); Asal, Benjamin, 89155 Ersingen (DE); Scherer, Gabriele, 89197 Weidenstetten (DE)
(74) Representative: Finkele, Rolf

(57) **Abstract**

The invention relates to a valve assembly (3) for a watersprayer equipment (1), comprising a valve housing (11) comprising a tubular valve chamber (14) with an inlet port (10) and an outlet port (13), and cylindrical piston (15) with a solid piston body (16) as a valve body axially reciprocally as well as rotatably received within the valve chamber (14), a piston groove (20) of the piston (15) being delimited at its opposite axial ends by two piston lands (21, 22), the piston body (16) comprises at least one piston bar (23, 24) extending, between the two piston lands (21,22); wherein the piston lands (21, 22) and piston groove (20) define a sliding piston valve functionality, in which in a first axial position of the piston (15), the inlet and/or outlet port (10, 13) is/are sealingly closed by one of the lands (21,22), and in which in response to an axial sliding movement of the piston (15), the inlet or out-let port (10, 13) is gradually released to enable fluid passing via the groove (20) from the inlet port (10) to the outlet port (13); and wherein the lands (21, 22) and the least one piston bar (23, 24) define a rotary piston valve functionality, in which a free passage width between the inlet port (10) and outlet port (13) is modifiable by at least one of the bars (23) in response to a rotary movement of the piston (15).

## Description

The invention relates to a water sprayer or watering equipment, such as irrigation or watering devices, water sprayer guns, irrigation or watering syringes or showers, in particular of hand-held type. The invention is also related to a valve assembly for such water sprayer equipment.

Water sprayer equipment, such as watering syringes, are known in the art, for example for garden watering and irrigation etc. Some known equipment, such as for example described in US 7,025,291 B2 and WO 2007/083961 A1, includes levers for actuating an on-off valve and additional rotary knobs for controlling the flow rate of water, i.e. the amount of water that can pass through the watering equipment.

The known solutions, however, are comparatively complex with regard to construction, design, and manufacture, and are furthermore still to be improved with regard to ease of use, flow control, and adjustment.

Therefore, it is an object of the invention to provide a new, particularly an improved, valve assembly and water sprayer equipment. In particular, a valve assembly and water sprayer equipment shall be provided, that is comparatively simple with regard to construction, constructional effort, assembly, manufacture, and/or easily handleable by a user or operator, in particular with regard to on-off-switching and flow control.

This object is solved by the independent claims. Embodiments result from the dependent claims and the following description of embodiments and examples.

In an embodiment, a valve assembly for a water sprayer equipment, such as a water sprayer or water gun, in particular of hand-held type is provided. The water sprayer equipment and valve assembly are for example designed for watering, irrigation, or cleaning purposes. Such watering equipment and valve assembly may be configured and designed for connecting to a hose as the water supply source. Albeit the invention is described in connection with water, such as bare water, as the liquid, the water sprayer assembly and valve assembly are suitable for use with water mixed with additives, such as cleaning agents, fertilizers and others, or other water-like liquids.

The valve assembly comprises a valve housing that comprises a tubular (or: cylindrical) valve chamber with an inlet port and an outlet port. The valve housing is preferably an integral part, i.e. a one-piece part, made from metal or plastic, for example. The inlet and outlet port may, when viewed from the outside of the housing, open into the valve chamber, wherein the inlet port is for supplying water (or: liquid) to the valve chamber and the outlet port is for discharging water (or: liquid) from the valve chamber.

The valve assembly comprises a cylindrical piston, e.g. a spool or control piston, as a valve body. The valve assembly in particular is of the piston-valve or piston-valve type, in which the passage of liquid or water is controlled by moving the piston or spool within the valve chamber. The inner diameter or inner diameters of the valve chamber substantially correspond to the outer diameter or outer diameters of the piston, particularly to allow movement of the piston within the valve chamber for on-off switching and flow control. The sheath diameter of the valve chamber and the piston may be substantially constant in axial direction or, according to exemplary embodiments, vary depending on hydraulic residual forces to be established by the input pressure of supply water supplied to the inlet port during use.

In particular and according to a corresponding exemplary embodiment, the valve chamber and the piston, specifically the sheath diameter(s), may be selected such that respective residual forces originating from supply water pressure lead to an equilibrium condition, in which the supply pressure does not or not substantially bias the piston in axial direction. In such cases, the piston may be substantially force-free in axial direction with regard to supply water pressure.

According to an exemplary embodiment, the sheath diameters may be selected such that the supply water pressure leads to biased condition, in which, for example, the piston is axially biased towards the closed or off-position, in which a flow-through of water is blocked by the piston.

In the context of the current disclosure, the term "axial" shall refer to the longitudinal axis or direction of the piston or spool, and/or valve chamber, e.g. a longitudinal axis or direction parallel to a cylinder axis of the piston and/or valve chamber. The piston and valve chamber may, in the assembled state, be arranged coaxially with a common longitudinal or central axis. Terms like "lateral" or "radial", in particular in connection with the piston and valve chamber, shall refer to the axis or direction transverse or perpendicular with regard to "axial".

The valve body, i.e. the piston, is axially reciprocally, in particular axially linear moveable, as well as rotatably received within the valve chamber. This means, that by applying a linear force, the piston may be moved or shifted in the valve chamber in axial direction, and that by applying a rotary force to the piston, the piston may be rotated around the axial direction within the valve chamber.

The piston comprises a piston body and a piston groove (or: recess or cutout) that is delimited at its opposite axial ends by two piston lands of the piston body, wherein the piston lands are distanced from each other towards opposite first and second axial ends of the piston. It is to be noted that composite terms including for example the word "piston", such as piston body, piston groove, piston land or similar, are referred to herein also as groove, land etc..

The piston body represents a solid body, i.e. a body made from solid material. Being made from a solid material, the solid piston is free from inner conduits and ducts, in particular free from conduits and ducts for guiding water. In this connection, it is to be noted that the piston body and the piston groove form the piston, with the piston groove representing a channel or recess through which water may pass. However, the piston body as such is solid.

A piston land in connection with the piston refers to cylindrical sections of the piston body bordering the piston groove at respective axial ends, and having outer diameters substantially corresponding to respective inner diameters of the valve housing, in particular valve chamber. A piston land, also referred to herein as "land", may comprise associated seals or gaskets, such as ring or annular seals, suitable and arranged on the piston body and/or piston land for blocking water from passing in axial direction between the inner wall of the valve chamber and the other wall of the piston body. Such seals are preferably of radial type, but may according to an exemplary embodiment also be of axial type.

The piston, in particular the piston body, comprises at least one piston bar extending, in axial direction, between the two piston lands, parallel to and in overlapping arrangement with the piston groove. In other words, the piston groove is defined as a void or empty space left over by the one or more bars of the piston body and between the piston lands, as compared to a cylindrical volume defined by the rotary volume or outer sheath of the piston body. The piston groove is in particular defined such that the piston groove is apt to fluidly communicate with the inlet port, the outlet port, and both the inlet port and the outlet port, respectively, depending on the axial position of the piston. Accordingly, the piston enables path-through of water, in a direction perpendicular or transverse to the axial direction or longitudinal piston axis, if in fluid communication with both the inlet port and the outlet port, and blocks path-through of water if in fluid communication with only one of the inlet port, the outlet port, or none of both.

As will be described in more details below, at least one of the one or more bars is formed such that, depending on the rotary position of the piston or piston body, the piston bar may at least partially or fully block passage of water through the valve chamber.

With the valve assembly, the piston lands and the piston groove define a sliding piston valve (or: sliding spool valve functionality), in which:
a) in a first axial position of the piston within the valve housing, the inlet port and/or the outlet port is/are sealingly closed or sealed by one of the piston lands, in particular the one or more piston lands, and, if present, one or more annular seals, to block fluid from passing from the inlet port via the piston groove to the outlet port, and in which,
b) the inlet port or the outlet port is gradually released by the piston land and the axial length of piston groove is brought in an overlapping arrangement, in particular in an ever larger overlap, and fluid communication with both the inlet port and the outlet port in response to an axial displacement or an axial sliding movement of the piston from the first axial position to any of a plurality of axially displaced second positions to enable fluid passing via the groove from the inlet port to the outlet port.

Sealingly closing the inlet or outlet port may, according to an exemplary embodiment, involve sealing or closing the respective port by the land fully overlapping outer axial ends of a respective port to block entrance or discharge of water from the inlet port or from the outlet port, respectively. Such closure may involve seals, e.g. annular seals, associated with the lands. Closing the inlet or the outlet may, according to an exemplary embodiment, involve sealing or closing the inlet port or the outlet port within the valve chamber at one axial end of the inlet port or the outlet port, respectively, to block water from passing through the valve chamber and from the inlet port to the outlet port. The term "sealingly" shall mean that passage of water is blocked to the extent needed for avoiding pathing or leaking through water. If one of the inlet port or the outlet port is sealingly closed, the valve assembly is in the off-configuration (closed), and is in the on-condition (open) if the piston groove fluidly communicates with both the inlet port and the outlet port.

With the valve assembly, the piston lands and at least one of the one or more piston bars further provide, i.e. in addition to the sliding piston valve functionality, a rotary piston valve functionality, in which a free passage width between the inlet port and the outlet port is modifiable by at least one of the piston bars in response to a rotary movement of the piston or piston body. The piston bar may therefore be considered as a valve gate for implementing the rotary valve functionality. For example, by a rotary movement, the flow width available for the water to pass from the inlet port to the outlet port may be modified or changed, depending on the rotary position and orientation of the bar. If the piston is, for example, in a rotary position in which the piston bar does not overlap the inlet port and the outlet port, water may freely pass through the valve chamber via the piston groove, whereas if the bar fully or partially overlaps the inlet port or the outlet port, for example, pass-through of water is restricted depending on the degree of rotation or the rotary position and overlap of the piston bar and/or piston.

The valve assembly has the advantage that a dual functionality may be provided by using a reduced number of parts, i.e. the valve housing with the valve chamber and a single piston. This simplifies manufacture and assembly. The dual functionality allows switching between the on-/off-conditions through an axial movement of the piston, and controlling the flow rate by a rotary movement of the same piston. Further, the valve assembly is suitable for providing a water sprayer equipment with easy handling, e.g. if the piston body and piston groove are designed such that the piston, when pressurized with incoming water, is in the equilibrium condition or, for example, slightly biased to the closed or off-position.

According to an exemplary embodiment, the solid piston body of the piston is a one-piece part and made from or consisting of solid or full material. The material may be metal or plastic.

The terms "solid", "solid material", and "full material" shall mean that the piston body is made from a material, particularly from a single material, without the piston body having inner or internal voids, hollow areas, channels or ducts and the like, such as ducts or channels that would allow passage of water through the valve from the inlet port to the outlet port. Specifically, the term "solid" or "solid material" shall mean that the entire inner volume of the piston body is solid, e.g. made of the a material that is continuous over the whole volume of the piston body, in particular without any internal gaps, voids, channels intended for guiding through water/liquid, and/or that the piston body has a closed outer surface impermeable to water or liquid intended for passing through the valve. In other words, the piston body being made from solid material represents a "solid part" within the ordinary meaning of engineering, in particular meaning that the entire piston body consists of a single "block" of material, as opposed to parts that are composed of different components or have inner hollow areas or channels, that e.g. may be flown through or are intended to be passed by water/liquid in connection with valve function. With the piston body being solid, the water can pass only around the mantle surface, outer lateral surface, or sheath of the piston body, i.e. via and through the piston groove when placed within the valve chamber. In this connection, the piston groove and other recesses mentioned further below, e.g. in connection with a coupling section for a rotary control element, e.g. a dial, and annular grooves for seals, do not represent "inner" voids of the piston body lying within the sheath of the piston body, which is still "solid" even if such sections are present.

Using a solid piston body provides the advantage of simplified manufacture. This is because it is not required to establish or produce inner channels or ducts as for example suggested by US 7,025,291 B2.

According to an exemplary embodiment, the first axial end of the piston or piston body comprises a contact surface or section, preferably projecting from the valve housing, in particular when the valve body is functionally arranged, ready for the intended operation within the valve chamber. The contact surface or section may be implemented at a distal, free end of, for example, a pin-shaped axial extension of the piston body or a flange at the first axial end. The contact surface is configured for operable contact with an actuating element, such as a lever or lever-type actuator, for axial displacement of the piston from the first axial position (closed or off-position), i.e. out of the first axial position, to any of the second positions in response to the actuating element actuating the sliding piston valve functionality. The piston further comprises, preferably at the second end, opposite to the first axial end of the piston, a coupling section configured for operable coupling with a rotary control element, in particular dial, for rotary moving the piston in response to a rotary movement of the rotary control element to actuate the rotary piston valve functionality.

The contact surface and coupling section are preferably implemented on or at opposite distal ends of the piston or piston body. By this, the valve assembly may be included or installed in a water sprayer assembly with the actuating element for actuating the sliding piston valve functionality arranged on one lateral side of a handle, e.g. on a side averted from the operator during ordinary use, and the rotary control element, such as a dial, for actuating the rotary piston valve functionality arranged on an opposing lateral side of a handle, e.g. on a side facing the operator during ordinary use. In this configuration, the actuating mechanisms for the two functionalities, i.e. sliding and rotary piston functionality, do not interfere with each other such that controlling respective functionalities may be simplified.

According to an exemplary embodiment, the valve assembly may be configured such that in the first axial position, e.g. in the closed position or off-position of the valve assembly, the inlet port or the outlet port is sealingly closed by one of the piston lands, in particular a piston land associated with one or more annular seals, while the axial length of the piston groove is in an overlapping arrangement and fluid communication with the outlet port or the inlet port, respectively.

The expression "sealingly close" may for example refer to the land and/or combination of land and annular seal being, with regard to the axial direction, in an overlapping arrangement with the inlet port or the outlet port, to thereby block water from entering the valve chamber and passing through the valve chamber in axial direction. For example, the piston land, and, if provided for, two or more annular seals associated with and arranged distanced from each other in axial direction on or at the land, may extend beyond the width of the inlet port or the outlet port in axial direction to block passage of water. It is also possible, that an axial end of the land, and, if provided for, one or more annular seals associated with and arranged on or at the land, is arranged axially outside and adjacent to the inlet port or the outlet port to block water from passing the land and/or seal. Within the scope of the invention, it is possible from a functional point of view, that the off-condition or closed position either involves the land blocking the inlet port or the land blocking the outlet port. In both cases, flow-through of water is inhibited.

According to an exemplary embodiment, in the first axial position (off-position or closed position), the outlet port is sealingly closed by the one of the lands, and, if provided for, the seal(s), while the piston groove is in an overlapping arrangement and in fluid communication with the inlet port. In this configuration, the input pressure of water supplied to the valve assembly via the inlet port applies to both axial ends of the piston groove, and it is possible to adjust the residual force acting on the valve body and resulting from the hydrostatic or hydraulic water pressure of water supplied. For example, if the axial diameters at the axial ends of the piston body governing opening and closing of the valve are the same or substantially the same, the piston body may be in a hydrostatic or hydraulic equilibrium, which does not require overcoming or requires almost no hydrostatic forces for moving the piston body out of the first axial position, i.e. for opening the valve. This in turn contributes to ease-of use. If, however, for example, one axial diameter at one axial end is larger than the axial diameter at the other axial end, a residual hydrostatic or hydraulic force may result that urges the piston body in the direction of the larger diameter. If the axial diameters are selected such that a residual force results that urges the piston body towards the first axial position (closed or off-position), the valve body is urged towards the closed position. By this, the hydrostatic/hydraulic force may support the closing operation or closing movement of the piston body towards the first axial position for closing the valve.

According to an exemplary embodiment, the inlet port may be sealingly closed by the one of the lands, and, if provided for one or more seals associated with respective land/s, while the groove is in an overlapping arrangement and in fluid communication with the outlet port. In this configuration, the piston groove is not impinged with water supplied via the inlet port in the closed position of the valve (first axial position).

According to an exemplary embodiment, the piston, respectively the piston body, may comprise two annular seals, in particular two annular seals associated with the piston body, in particular associated with the piston lands of the piston body. The annular seals may be removably attached to the piston body, e.g. at or on a respective land. In particular, each annular seal may be held and latched or received in an annular groove of the piston body, the annular groove associated with and/or immediately adjacent to a corresponding land. Preferably, the annular seals are radial seals having a circular diameter and sealingly fit against the inner wall of the valve chamber in the assembled state. The seals may be arranged at opposite ends of the piston, i.e. distanced from each other towards the opposite ends of the piston. The seals may be distanced from each other and arranged axially outside of the piston groove, e.g. to seal the piston at respective positions to avoid leakage and pass-through of water in axial direction beyond the annular seals, in particular in an axial configuration in which the seal(s) sealingly fit against the inner wall of the valve chamber.

According to an exemplary embodiment, a first annular seal of the two annular seals may be arranged on or at one of the lands to block and, in particular in the first axial position, sealingly fit the piston against the inner surface of the valve chamber. By this, the annular seal is configured to block, in the first axial position, fluid from passing from the inlet port to the outlet port. The first annular seal may further be configured to enable passage of water from the inlet port to the outlet port in response to an axial movement of the piston from the first axial position (closed or off-position). A second annular seal may be arranged at or on an opposite end of the piston sealingly fitting the piston against the inner surface of the valve chamber or an inner surface of the valve housing to block water, in particular in any axial position of the piston during ordinary operation, from exiting or leaking from the valve chamber in axial direction, i.e. to seal the valve housing against leakage of water in axial direction.

According to an exemplary embodiment, an outer axial diameter of the first annular seal is substantially the same as an outer axial diameter of the second seal. Respective diameters may apply to the respective piston land or piston lands on or at which the associated seal is located and/or to inner diameters of sections of the valve chamber in which the seals are located and axially moveably. If the diameters are the same or substantially the same, the valve body and valve chamber may be configured such that the valve body is in a hydraulic or a hydrostatic equilibrium, so that, when the inlet port is pressurized with feed water, no or almost no residual axial hydraulic forces act on the valve body. This may facilitate movements of the valve body in axial direction and hence ease actuation of the sliding piston valve functionality. According to another exemplary embodiment, an outer axial diameter of the first annular seal may be smaller than an outer axial diameter of the second annular seal. Also in this embodiment, the diameter may related to associated lands and/or an inner diameter of the valve chamber. In this case, a residual axial force urging the valve body towards the first axial position (closed position or off-position) may be caused by incoming pressurized water, e.g. if the inlet port is pressurized with feed water. In this configuration, the valve assembly may have an automatic closure feature that is driven by feed water pressure. In all, the valve assembly suggested herein is flexible with regard to adjusting hydraulic forces acting on the valve body through feed water pressure.

According to an exemplary embodiment, the piston may comprise three or more annular seals. The annular seals are configured and installed such that they seal the piston body against the inner cylindrical wall of the valve chamber. As mentioned above, the seals may be annular seals, e.g. sealing the valve body radially against the valve chamber, and associated with one of the piston lands, e.g. arranged at or on a respective piston land. A first annular seal and a second annular seal may be arranged, respectively, at or on one of the lands sealingly fitting the piston body, in particular the respective land, against the inner surface of the valve chamber or an inner surface of the valve housing in any operational axial position of the piston. The first annular seal and the second annular seal may therefore function as terminal seals, sealing opposite end sections of the piston body against the inner wall of the valve chamber to avoid axial leakage of water in axial direction. With this embodiment, an intermediate third annular seal may be provided that is arranged at or on one of the lands and axially between the first annular seal and the second annular seal and between the inlet port and the outlet port. The third annular seal sealingly fits, in the first axial position, against the inner wall of the valve chamber to avoid passage or leakage of water from the inlet port to the outlet port in axial direction of the piston body. By using such three annular seals, the valve body may be fully sealed against the inner wall of the valve chamber such that leakage of water out of the valve housing (first axial seal and second axial seal) and a tight closure of the valve assembly in the first axial position (intermediate seal) may be obtained. Further, the seals may seal the valve body against the valve chamber to inhibit axial leakage of water from the valve housing during use, i.e. the seals may inhibit water from passing elsewhere except the outlet opening (when opened or unblocked by the valve body). The first annular seal and the second annular seal may be provided on or at the valve body, such that when the valve body is operably inserted into the valve chamber, the first annular seal and the second annular seal are arranged such that, in any operational axial position of the valve body, i.e. any axial position the valve body may take during ordinary operation within the valve chamber, the first annular seal and the second annular seal are positioned outside of a cylindrical section of the valve chamber, which section includes the inlet port and the outlet port. The third or intermediate annular seal may be provided on or at the valve body such that it is arranged, in the first axial position of the piston body, in a cylindrical section of the valve chamber that is axially between the inlet port and the outlet port, to axially seal the valve chamber between the inlet port and the outlet port and block passage and leakage of water from the inlet port to the outlet port. If the piston body is moved axially away from the first axial position (sliding opening movement), i.e. if the piston body is axially moved for opening the valve by actuating the sliding piston valve functionality, the third annular seal may be moved into a cylindrical segment of the valve chamber including, depending on the valve configuration (i.e. whether the inlet port or the outlet port is sealingly closed by the valve body in the first axial position), the inlet port or the outlet port to enable passage of water from the inlet port via the piston groove to the outlet port. The third annular seal may, in one configuration, be arranged axially adjacent to the piston groove, wherein upon axial movement of the piston body from the first axial position, such that the third annular seal releases or enables passage of water from the inlet port through the piston groove to the outlet port.

The annular seals referred to herein may be locked to the valve body via an annular groove or recess of the valve body, to fix or catch the seal to, at or on the valve body against axial displacement relative to the valve body. If the annular seal is provided as a ring seal or radial seal, having, for example, a circular cross section, the part of the seal projecting in radial direction beyond the valve body may represent a bulge projecting from the valve body and be suitable for sealingly fitting against the inner wall of the valve chamber.

It is to be noted, that the function and corresponding components of the valve assembly that are responsible for enabling and disabling passage of water from the inlet port to the outlet port may be referred to as "valve".

In embodiments of the valve assembly including three seals, the outer diameters of the first seal, the second seal and the third seal may be substantially the same. In this configuration, the valve body may be, when installed in the valve chamber having corresponding inner diameters, in hydraulic or hydrostatic equilibrium if pressurized with feed water. In a variant, an outer axial diameter of the first annular seal and/or the second annular seal may be larger than an outer axial diameter of the third annular seal (intermediate seal). In this configuration, the piston valve may be urged to the first axial position, i.e. closed or off-position of the valve assembly, if pressurized with feed water pressure.

According to an exemplary embodiment, the valve assembly may comprise a biasing element, such as a spring, particularly a spiral spring, preferably arranged coaxially with the piston, and configured for biasing the piston towards the first axial position, i.e. the closed or off-position. The biasing element may be arranged coaxially with the piston, and be in direct operable contact with the piston to act on the piston and urge the piston towards the first axial position. An exemplary embodiment may include a biasing element that indirectly acts on the piston, e.g. via an actuating element such as a lever that is coupled to or mechanically associated with the piston for actuating the sliding piston functionality. For example if the valve assembly, in particular the piston or one distal free end of the piston, is configured for interaction with an actuating element for actuating the sliding piston functionality, the actuating element may be attached to or configured to engage the piston, e.g. the distal free end of the piston, and biased, in particular spring biased, to drag the piston towards the first axial position if an operator releases the actuating element. The actuating element may be attached to the valve housing or an enclosure or casing surrounding the valve housing, e.g. a handle grip or a casing of a handle for gripping a water sprayer equipment including the valve assembly.

In the context of this disclosure, the enclosure or surrounding casing and the actuating element, and/or the rotary control element may be considered as being part of the valve assembly.

According to an exemplary embodiment, the biasing element may be configured to act directly on the piston, and positioned outside of the water-bearing section of the valve chamber or valve housing. In this configuration, one axial end of the biasing element, such as a spiral spring, may be in operable contact with, e.g. engage or abut against, the piston, for example at a flange provided at, preferably integral with, a distal section or distal end of the first axial end of the piston. The distal end or section may be configured for interaction with or engagement of an actuating element for actuating the sliding piston functionality. An opposite axial end of the biasing element may be in operable contact with the valve housing, and/or an enclosure, or surrounding casing of the valve housing. The configurations in which the biasing element is in operable contact with the piston and valve housing, which requires no additional components such as an encasing etc., has the advantage that the biasing element may be associated with the valve housing and piston in a loss-proof manner, which may be advantageous for assembly of a water sprayer assembly or equipment.

According to an exemplary embodiment, the biasing element may alternatively positioned within the water-bearing section of the valve chamber or valve housing. In this configuration, one axial end of the biasing element, e.g. a spring, in particular spiral spring, may be in operable contact with, e.g. engage or abut, the piston. For example, the one axial end of the biasing element may be in operable contact with a bearing surface of a flange or shoulder that is integral with the second axial end of the piston. Such a bearing surface may face away from the first axial end, which may involve that the biasing element exerts a biasing force at the second end on the piston or piston body, biasing the piston towards the first axial position. Further, in this configuration, the opposite axial end of the biasing element may be configured for bearing against the valve housing or a component to be directly or indirectly fitted to the valve housing, in particular a rotary control element, e.g. a dial, for actuating the rotary piston valve functionality, an enclosure for the valve housing, and/or a surrounding casing for the valve housing. Such a configuration may be suitable for obtaining a compact design.

The biasing element, may it be installed outside or inside of the water-bearing section of the valve assembly, may be made from a stainless material, e.g. stainless metal, or other elastic and resilient material or structure, e.g. plastic.

According to an exemplary embodiment, the valve assembly may comprise a latching mechanism for latching the piston, in particular piston body, within the valve housing. In particular, the second axial end, e.g. the end facing the rotary control element, opposite to the first axial end of the piston, e.g. facing the actuating element, may comprise one or more latching elements, such as snap elements, which are, in the assembled state, in operational engagement with a latching groove or flange, such as a snap groove or flange, provided at an inner wall of the valve housing. The latching mechanism may be configured or operable to block movement of the piston at the first axial position in a movement that is directed to the first axial position, while enabling movement of the valve body in opposite direction. In other words, the latching or snapping mechanism enables movements of the piston body within the valve chamber for opening the valve, but restricts axial movement of the piston body beyond the closed position in the first axial position due to interaction of the latching elements with the latching groove or flange when reaching the first axial position. Such a latching mechanism may facilitate assembly of the valve assembly, because it may be provided for that the valve body can be axially inserted into the valve chamber, e.g. a bore in the valve housing associated with the valve chamber, from one end thereof with the latching elements first, until the latching elements engage the latching groove or flange. If the piston body comprises, at the first axial end opposite to the latching elements, a flange for abutting against the valve housing to restrict movement of the piston body, e.g. further than the fully opened state, into the valve chamber, the piston body, once latched to the latching groove or flange is loss-proof secured to the valve housing. Similarly, if the valve chamber is tapered and/or includes a flange or shoulder at the axial end facing the piston body and latching elements in the assembled state, the taper, flange, and/or a corresponding shoulder may block axial movement of the piston body beyond the taper, flange, and/or shoulder and beyond the fully open position. Similarly, the piston body can be latched to the valve housing in a loss-proof manner. The latching elements and additional elements for restricting axial movement and enabling loss-proof attachment, for example, are preferably arranged and provided such that the piston body latched to the valve housing is axially movable from the first axial position (off-position or closed position) to any on-position or open position of the piston body enabling passage of water from the inlet port to the outlet port.

The one or more latching elements may, respectively, comprise one or more latching noses projecting radially from the piston body and engaging the latching groove or flange. The latching noses may be provided on or at a distal end of a latching tap integrally formed with the piston body and extending axially from one end, e.g. the second end of, the piston body. The latching tab may be flexible and resilient with regard to deformation forces acting in radial direction of the piston body. By this, during insertion of the piston body into the valve chamber the tabs may be deflected radially inward and snap radially outward into the latching groove once reaching the latching groove or flange with the latching noses engaging the latching groove or flange.

According to an exemplary embodiment, the second axial end of the piston may comprise first coupling elements for establishing a rotary, in particular torque-proof coupling, with one or more second coupling elements of a rotary coupling element, such as a dial, for actuating the rotary piston functionality. As mentioned above, the rotary coupling element may be part of the valve assembly. The first and second coupling elements are preferably configured for establishing a form-fitting coupling or positive connection, between the piston and the rotary coupling element at the second axial end of the piston body. The first coupling elements are preferably configured to enable a sliding movement of the piston relative to the second coupling element in axial direction of the piston such that the piston is axially moveable from the first axial position in direction of the second end, e.g. towards the rotary coupling element, under continued mutual engagement of the coupling elements. By this, the rotary coupling element may be fixed in place on or at the valve housing or surrounding components, such as an enclosure or surrounding housing, in a rotatable manner without impairing axial movement of the piston for actuating the sliding piston functionality. The coupling elements may be configured to compensate for distance variations between the rotary control element not movable in axial direction and the piston that is moved axially upon actuating the sliding piston valve functionality. The coupling elements may mutually engage whilst being mutually displaceable.

According to an exemplary embodiment, the coupling elements may be configured or implemented to form a jaw-type coupling. Such a jaw-type coupling, e.g. with mutually engaging but mutually displaceable jaws, teeth and/or slots, may enable distance compensation between the rotary control element and the piston. According to an exemplary embodiment, the first coupling elements may define, at the distal free end respectively at the second axial end of the piston a slotted structure comprising an axial slot defined by two opposing first jaws extending in axial direction of the piston. The slot may be configured to receive a protrusion provided on the rotary control element and extending towards and parallel to the piston and engaging between the first jaws into the slot. In other words, the first coupling elements may comprise jaws, tabs or teeth extending axially from a distal end of the piston, and the second coupling element may comprise a further jaw, tab, or tooth engaging with the first coupling elements to form a rotary or torque-proof coupling between the rotary control element and the piston body while enabling axial movements of the piston relative to the rotary control element, e.g. movements forth and back towards the rotary control element.

According to an exemplary embodiment, the slotted structure may be provided at the rotary control element and the jaw engaging into the slotted structure may be provided at the axial distal end of the piston (in particular the second end). The coupling elements and coupling structure may include, in addition to the coupling functionality, latching elements for latching the piston body and/or the rotary control element to the valve housing and/or to surrounding elements such as an enclosure or a housing.

According to an exemplary embodiment, the coupling elements for providing the rotary coupling may be used for latching the piston to the valve housing and/or for latching the rotary control element to the valve housing or surrounding components such as an enclosure or housing, respectively. Mutual axial engagement of the latching elements may in such configurations function as a latching lock disabling disengagement of the latching elements.

According to a preferred embodiment, at least one latching nose may be integrally formed at a distal free end of at least one of the first jaws, preferably at each of the first jaws, on a lateral side averted from the slot, e.g. projecting from the jaw in radial direction, with the latching nose forming the latching elements mentioned further above. The latching nose(s) or elements are configured such that, in the first axial position of the piston, the latching noses engage a latching groove or flange, e.g. a circumferential annular shoulder, a cylindrical ring-shaped recess, or bore formed in the valve housing. The latching groove or flange may be arranged concentrically to the valve chamber. The first jaws are preferably flexible, bendable and/or resilient with regard to movements perpendicular to the piston axis, e.g. radially inwards, such that the piston is insertable into the vale seat with the jaws first from a side of the valve chamber, or valve chamber bore, averted from the latching groove or flange, such that the first jaws are deflected towards the piston axis, i.e. radially inwards, during insertion and snap the snapping nose/s into the latching groove or flange once reaching the first axial position.

The nose/s and latching groove or flange provide stop elements for stopping the piston when returning to and reaching the first axial position after an opening operation of the actuating element. At the same time, if the latching elements for latching attachment of the piston body within the valve chamber and the jaws for establishing the rotary coupling are functionally integrated, i.e. jaws for the rotary coupling include latching noses, for example, mutual engagement of the jaws, e.g. the protrusion engaging in a slot between the first jaws, may block disengagement of the noses. For example, a jaw, e.g. the protrusion, provided at the rotary control element may form-fit into a slot between jaws, e.g. first jaws, carrying latching noses for latching into the latching groove or flange. Such a functional integration of latching and coupling may be advantageous with regard to a robust and stable design of a water sprayer equipment, and may be advantageous for simplifying assembly.

According to an exemplary embodiment, the groove may be formed asymmetrically with regard to the longitudinal axis of the piston. For example, the piston groove may be defined by two lands and a, e.g. radial outer, piston bar extending between the two lands. The piston bar may be placed off-center with regard to the center axis of the piston. The piston bar may have a form like a cylinder segment with an outer curved surface substantially flush with the inner wall of the valve chamber. By this, a comparatively compact design may be obtained, for example if the width of the piston bar measured transversally to the axial direction of the piston corresponds to the width of an inlet opening and/or an outlet opening measured transversally to the axial direction of the valve chamber.

According to an exemplary embodiment, at least one of the bars is positioned off-center relative to the longitudinal axis of the piston, preferably at a radially outer position. By this a comparatively compact design and good flow characteristics may be obtained, for example a comparatively large pass-through cross section in the fully opened state.

According to an exemplary embodiment, one of the bars may be provided for controlling the pass-through cross section when actuating the rotary piston valve functionality and one or more additional bars may be provided as support elements or support bars for mechanically stabilizing the valve body.

According to an exemplary embodiment, at least one of the bars may have a substantially rectangular axial cross section and may laterally extend between and to opposing inner sides of the valve chamber. Such a bar may for example be provided symmetrically and collinear with the center axis of the piston.

According to an exemplary embodiment, at least one of the bars may have a form substantially corresponding to a cylinder segment, e.g. with a cross section substantially corresponding to an arc segment of a circle, extending between the lands, with an outer cylindrical surface of the cylinder segment abutting an inner cylindrical wall of the valve chamber, such that a circumferential length of the outer cylindrical surface substantially corresponds to, preferably is slightly larger than, a circumferential width of the inlet port and/or outlet port, depending on whether the respective piston bar is provided for covering or closing the inlet or outlet port for flow control. Such embodiments provide a comparatively robust and simple control functionality for adjusting the flow rate based on the rotary piston valve functionality.

According to an exemplary embodiment, the rotary control element for actuating the rotary piston valve functionality may include a rotary limit stop structure or element, delimiting or restricting the rotation angle of the rotary control element between two rotary end positions. A first rotary end position may be associated with a rotary position of the valve body, in which position passage of water through the valve chamber is blocked via the piston bar, e.g. by the bar overlapping or closing the inlet port or the outlet port, and a second rotary end position may be associated with a rotary position of the valve body providing a maximal passageway through the valve chamber from the inlet port to the outlet port. The rotary control element may be rotated to substantially any position between the rotary end positions for actuating the rotary piston valve functionality. The rotary limit stop structure may for example comprise an annular ring segment at the rotary control element with abutment faces at circumferential ends of the ring segment abutting, in the assembled state, with stop elements provided on or at the valve housing or associated components, such as an enclosure or surrounding housing in the rotary end positions.

According to an exemplary embodiment, a snap-in structure may be provided that is configured to hold the rotary control element, preferably in a releasable manner, via snap-in locking in a respectively rotary position, e.g. selected by the user. Particularly the snap-in structure may include snap-in elements and corresponding detents at the rotary control element on the one hand, and at the valve housing or associated components, such as an enclosure or surrounding housing, on the other hand, or vice versa. The snap-in elements and detents may be provided at predefined positions, e.g. regularly distributed in circumferential direction with regard to the rotary movement of the rotary control element. In particular, at least the rotary positions corresponding to the outermost or end rotary positions enabled by the rotary limit stop structure, but also a plurality of intermediate rotary positions may be associated with respective snap-in elements to trap the rotary control element in such positions. This may provide the advantage of simplified operation with regard to flow adjustment via the rotary piston functionality, e.g. because a rotary position selected by the user may be prevented from being inadvertently changed during use. The snap-in structure is preferably designed such that the user is able to rotate the rotary control element without requiring undue effort, whilst locking the rotary control element appropriately a respectively selected rotary position.

According to an exemplary embodiment, the valve assembly may be configured such that it satisfies at least one of the following properties:
- a maximum cross section of all water-carrying parts or channels of the valve housing is in the range from 7 mm to 9 mm, preferably at about 8 mm;
- a maximum diameter of the piston is about 6 mm to 9 mm, preferably at about 8 mm;
- a diameter of the valve chamber is in the range from 6 mm to 9 mm, preferably at about 8 mm;
- a maximum passage width of the piston groove measured perpendicular to the piston axis is in the range between 3 mm to 6 mm, preferably at about 4 mm to 5 mm;
- an inner diameter of the inlet port is in the range from 7 mm to 9 mm, preferably at about 8 mm.

These properties have been proven advantageous with regard to water sprayer applications and water sprayer equipment, and enable for example, e.g. all cross sections of water-bearing components are 8 mm at most, a frost-proof implementation of the valve assembly. Further, the properties may contribute to the ease of use, for example in that for diameters of about 8 mm comparatively small-sized annular seals may be used, which in turn reduces friction forces for axially moving and/or rotating the valve body. Further, with low friction forces, biasing elements, such as springs, with comparatively moderate or low biasing forces may be used, which in turn requires lower actuation forces for axially moving the piston body when actuating the sliding piston functionality.

According to further exemplary embodiment, a water sprayer equipment or assembly, such as an irrigation or watering device, water sprayer gun, irrigation or watering syringe or shower, in particular of hand-held type, is provided.

The water sprayer equipment comprises an inflow path and a discharge path for supplying and discharging water, including supply or mains water as well as water-liquid mixtures or other liquids, to and from the water sprayer equipment, a valve assembly according to any exemplary embodiment described herein in connection with the invention for controlling water passage from the inflow path to the discharge path, a handle grip for gripping and holding the water sprayer equipment by hand, and an actuating element, such as a lever, and a rotary control element, such as a dial or control dial, for manually actuating the valve assembly and controlling flow and flow rate through the equipment.

With the water sprayer equipment, the actuating element is coupled to or operably couplable to the piston for actuating the sliding piston valve functionality, and the rotary control element is coupled to the piston for actuating the rotary piston valve functionality. The actuating element and/or the rotary control element may be attached to the handle grip, for example, an enclosure of the valve housing or surrounding casing of the valve housing, which may be part of the handle grip. The actuating element may be pivotally attached, and the rotary control element may be rotatably attached to enable forth and back movements of the piston body by actuating the actuating element and rotary movements of the piston body actuating the rotary control element.

According to an exemplary embodiment, the actuating element may be in operable contact with a contact surface formed at the first axial end of the piston or piston body, and the rotary control element may be coupled to or in operable contact with the second axial end of the piston or piston body opposite to the first axial end of the piston. Providing the control elements for actuating the piston valve, e.g. the actuating element such as a lever and the rotary control element such as a dial, at opposite sides of the piston body may contribute to the ease of use in that operating the sliding piston functionality via the actuating element does not interfere with operating the rotary piston functionality via the rotary control element. The rotary control element may be provided at a side facing the user in ordinary use, while the actuating element may be provided at a side facing away from the user. The water sprayer equipment may be configured such that the user is able to grasp the equipment by hand with the palm resting against a section of the lateral side at which the rotary control element is provided, and the fingers suitable for actuating the actuating element, e.g. lever.

According to an exemplary embodiment, the actuating element may be pivotally coupled to the handle grip, for example an enclosure, housing, one or more handle shells, and/or to a housing, e.g. an inflow piping, associated with the inflow path via a pivot joint, and a contact portion of the actuating element may be in operable contact with the piston, e.g. with the first end of the piston. The pivot joint and contact portion are preferably arranged at opposite ends of the actuating element. For example, the pivot joint may be located towards, e.g. near or at, an inflow opening, e.g. an inflow connector or coupling of or at the inflow path, for example for connecting a hose, and the actuating element may extend from the pivot joint in a direction towards the outflow path and/or the valve assembly. In particular, the actuating element may be attached such that an intermediary angle between the actuating element and the handle grip or a water supply piping of the water sprayer equipment opens towards the valve assembly and/or the discharge path and associated components, such as a spout or similar.

According to an exemplary embodiment, in which there is a free space between the actuating element, e.g. a lever or lever-type actuator, and the handle grip, a free opening between the actuating element and the handle grip or the water supply piping may be oriented towards the valve assembly and/or the discharge path and associated components. Such configurations with the actuating element attached towards or at an end of the water sprayer equipment associated with e.g. an opening of the inflow path, which may comprise a coupling or (quick-)connector for connecting a hose at the distal end, have the advantage that the risk of the watering assembly getting stuck or caught at an obstacle at the actuating element, when the water sprayer equipment is pulled, at a remote position via a hose connected to the water sprayer equipment, e.g. over the ground. An embodiment, in which the spacing between the outer side of the actuating element and the handle grip is not open, but closed, have the advantage of avoiding squeezing one's finger when pressing the actuating element.

According to an exemplary embodiment, the actuating element may extend, in the section along the inflow path or associated inflow piping which is in fluid communication with the inlet port, on a first long side of the handle grip and the rotary control element may be located at an opposing second long side at the handle grip. The handle grip and the rotary control element are preferably arranged such that, when a user grasps or holds the handle grip during ordinary manual use of the water sprayer equipment, the second long side rests against the palm of the user's hand, while the actuating element at the first long side is operable by the fingers of a user's hand grasping the handle grip. Such an arrangement is comparatively user-friendly, and allows actuating the two valve assembly functionalities via the actuating element and the rotary control element without interference.

According to an exemplary embodiment, comprising a valve assembly with the biasing element positioned within the water-bearing section of the valve chamber as discussed further above, the opposite axial end of the biasing element may bear against or engage a bearing structure, in particular a flange, of the rotary control element. The bearing structure preferably faces the valve housing and/or may be formed as a circumferential groove. In such configurations, the rotary control element or nearby components may comprise a seal, sealing the valve chamber from leakage of water from the valve housing in the region of the rotary control element. According to an exemplary embodiment, the rotary control element may be rotatably connected to the handle grip and/or to the valve housing at a side thereof, that is averted from the actuating element. The rotary control element may comprise a cylindrical projection projecting towards the valve housing and engaging a cylindrical projection provided at the valve housing or associated components and coaxial with the valve chamber. The rotary control element may be connected via a snap-in connection to the valve housing or associated components such as an enclosure or a surrounding housing, in which the snap-in connection may be established between mutually mating snap-in elements provided, on the one hand, circumferentially at an inner face or an outer face of an radially outer annular ring that is integral with the rotary control element and, on the other hand, circumferentially at an outer face or an inner face or groove of an annular flange that is integral with the valve body, formed at the associated component and/or the handle grip.

The valve housing and piston, in particular the piston body, may be made from metal or plastic. Further components, such as enclosures, surrounding housings, supply piping, inflow and discharge ducts may be made from metal or plastic.

In all, the above discussion reveals that the valve assembly and water sprayer equipment provide many advantages in connection with simplified manufacture, simplified assembly, ease of uses, and ease of handling and flow control. Exemplary embodiments of the invention will now be described in connection with the annexed figures, in which:
- FIG. 1: shows a first partial cross-sectional side view of a water sprayer equipment;
- FIG. 2: shows a second partial cross-sectional side view of the water sprayer equipment;
- FIG. 3 to 5: show side views of a piston body;
- FIG. 6: shows a perspective view of a rotary control element;
- FIG. 7: shows a variant of the water sprayer equipment of FIG. 1 and 2;
- FIG. 8: shows a first cross-sectional view of a detail of the valve assembly in a top view;
- FIG. 9: shows a cross section of the valve assembly;
- FIG. 10: shows in a top view a detail of a valve housing and rotary control element;
- FIG. 11: shows in a second cross-sectional, top view a detail of the valve assembly;
- FIG. 12-14: show cross sectional views of different operational conditions of the valve assembly;
- FIG. 15: shows in a cross sectional view a variant of the valve assembly; and
- FIG. 16: shows a partial cross-sectional view of a water sprayer equipment according to a further variant.

In the figures, like elements are designated with like reference signs, wherein for the sake of clarity and better illustration, not all possible reference signs are provided in some of the figures.

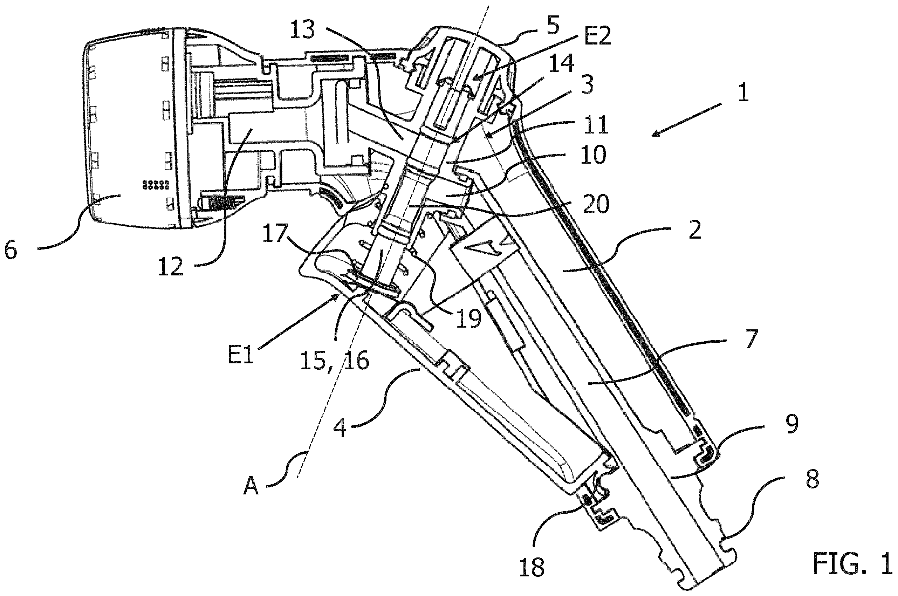

FIG. 1 shows a partial cross-sectional side view of a water sprayer equipment 1 implemented as an irrigation or watering device, particularly as a hand-held water sprayer gun, syringe, or shower.

The water sprayer equipment 1 comprises a handle grip 2, a valve assembly 3, a lever 4 as an actuating element, a dial 5, or control dial as a rotary control element, and a spout 6. The handle grip 2 may be formed as a case or enclosure with two or more shells, surrounding an inflow path 7 for supplying water, for example via a quick coupling 8 from a hose (not shown). The inflow path 7 may comprise an inflow piping 9 fluidly connecting the quick coupling 8 to an inlet port 10 of a valve housing 11 of the valve assembly 3.

The water sprayer equipment 1 comprises a discharge path 12 leading to the spout 6 and fluidly connected to an outlet port 13 of the valve housing 11.

The inlet port 10 and the outlet port 13 are respectively fluidly connected to a valve chamber 14 of the valve assembly 3. The valve chamber 14 is formed as a hollow cylindrical bore within the valve housing 11, and extends between two opposite lateral sides or ends (upper - lower end) of the water sprayer equipment 1.

The valve assembly 3 is provided for manually controlling passage from the inflow path 7 to the discharge path 12, which will be explained in detail below.

The lever 4 is formed on one lateral side of the handle grip 2, such that an operator gripping the water sprayer assembly 1 at the handle grip 2 can operate the lever 4 with the fingers, while the palm of the hand that grasps the handle grip 2 rests against the opposite lateral side of the handle grip 2.

The dial 4 is attached to the handle grip 2 or the valve housing 11 at the opposite end, substantially flush with or concentric to the valve chamber 14.

The valve assembly 3 comprises a piston 15 or valve piston, which is reciprocally and rotatably received in the valve chamber 14. The lever 4 and dial 5 are operably coupled to or in operable contact with the piston 15, more precisely to a piston body 16 of the piston 15 for controlling water passage through the valve assembly 3 in a dual operational functionality of the valve assembly 3.

More precisely, the lever 4 is in operable contact with a first end E1 of the piston body 16, particularly with a flange 17 of the piston body 16, provided at the first distal end E1 thereof. By actuating the lever 4, which is pivotally attached to the handle grip 4 via a pivot joint 18 near or at the quick-coupling 8 and extends towards the valve assembly 3, the piston body 16 can be slidingly moved within the valve chamber 14 parallel to axial extension of the valve chamber 14, i.e. parallel to the longitudinal axis A, in a direction from the first end E1 towards a second end E2. As will be described below, by such a movement, the valve assembly 3 may be transferred from the closed position to an open position, i.e. the valve or valve assembly 3 may be opened. Upon releasing the lever 4, a spiral spring 19, representing a biasing element, urges the valve body 16 in a direction from the second end E2 to the first end E1 to close the valve or valve assembly 3. This functionality represents a sliding piston valve functionality as one of two operational modes of the valve assembly 3.

The dial 5 is coupled to the piston body 16 at the second end E2 thereof via a rotary or torque-proof coupling. By rotating the dial 5, the piston body 16 is rotated correspondingly, wherein, as will be described in more detail below, a rotary position of a piston groove 20 formed with the piston body 16 is altered. By this, the width of a flow path from the inlet port 10 to the outlet port 13 may be varied. This functionality corresponds to a rotary slide functionality as a second operational mode of the valve assembly 3.

The piston body 16 is made from solid material as a one-part piece, and as such does not include inner holes, ducts, or channels for guiding through water in connection with supplying water from the inlet port 10 to the outlet port 13.

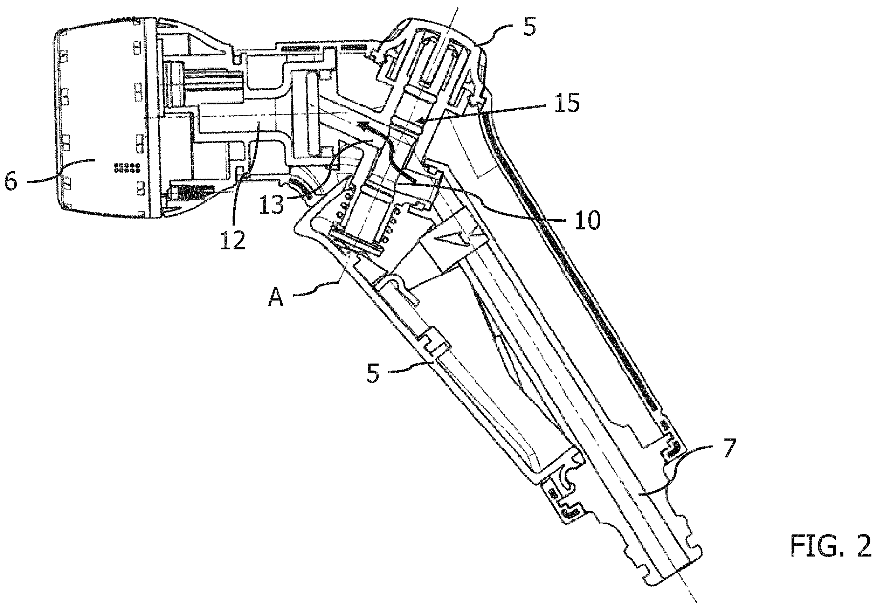

FIG. 2 shows a second partial cross-sectional side view of the water sprayer equipment 1. As compared to FIG. 1, in which the piston body 16 is in a first axial position, corresponding to the closed or off-position, the piston body 16 in FIG. 2 is moved away from the first axial position towards the dial 5, which corresponds to an open position, presently to the fully opened position with regard to the sliding valve functionality. This sliding movement of the piston body 16 is caused by the lever 4 acting on the first end E1 of the piston body 16, particularly on the flange 17. In the open position according to FIG. 2, the piston body 16 and piston groove 20 enable pass-through of water from the inlet port 10 to the outlet port 13, as indicated by an arrow. Therefore, the sliding piston valve functionality can be operated by slidingly moving the piston body 16 parallel to the longitudinal axis A to bring the piston groove 20 to an overlapping arrangement with both the inlet port 10 and the outlet port 13.

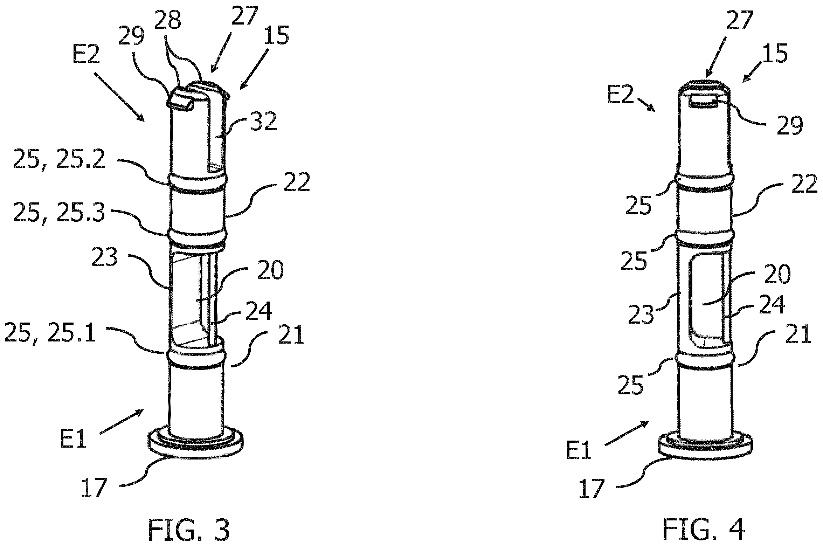

Now the function of the rotary piston functionality will be described with additional reference to FIGs. 3 to 6. The piston groove 20 is delimited at its opposite axial ends by two piston lands, i.e. a first land 21 at the first end E1 and a second land 22 at the second end E2, and distanced from each other in the direction of the longitudinal axis A. The distance of the lands, i.e. the axial length of the piston groove 20, is such that in the open position (e.g. FIG. 2), the piston groove 20 overlaps with both the inlet port 10 and the outlet port 13.

The piston groove 20 is further limited by a first piston bar 23 and a second piston bar 24 extending parallel to the longitudinal axis A and arranged in a radially outer region of the piston 15, asymmetrically with the longitudinal axis A. The first piston bar 23 is configured such that, if it is placed by a suitable rotary movement and position in front of the outlet port 13, water flow from the valve chamber 14 into the outlet port 13 is blocked, whereas, if rotated otherwise, enables passage of water from the valve chamber 14 into the outlet port 13. The second piston bar 24 in the given example is provided as a stabilizing support between the first land 21 and the second land 22, to increase mechanical stability of the piston body 16. The piston bars 23 and 24 extend in axial direction between the two piston lands 21 and 22, parallel to and in overlapping arrangement with the piston groove 20.

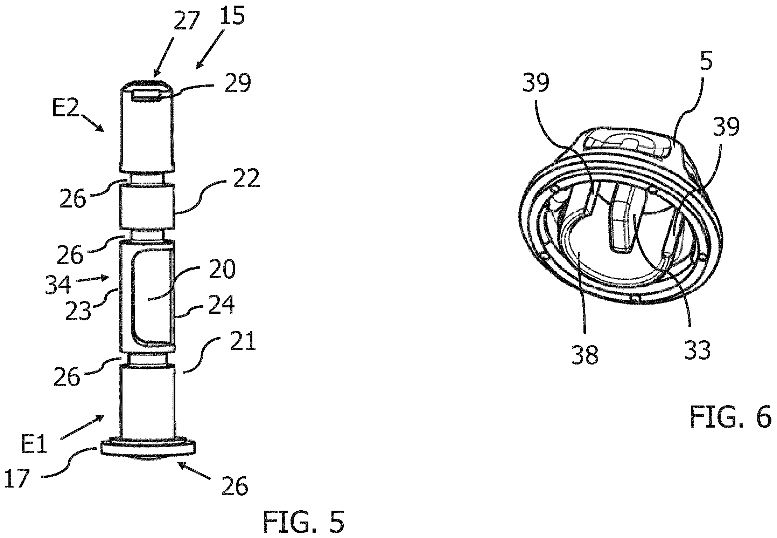

As compared to FIG. 5, the pistons 15 of FIG. 3 and 4 are fitted with three annular seals 25, which are, as can be inferred from a combined view of FIG. 3 and 5, for example, fitted in respective annular grooves 26 associated with the respective lands 21 and 22.

As will be appreciated from the above, in the given example the piston lands 21, 22 and piston groove 20 define a sliding piston valve functionality, in which:
- in a first axial position of the piston 15 within the valve housing 11 as shown in FIG. 1, the outlet port 13 is sealingly closed or sealed, wherein the second land 22 blocks fluid from passing from the inlet port 19 via the piston groove 20 to the outlet port 13 (see FIG. 1), and in which
- in response to an axial sliding movement of the piston 15, the outlet port 13 is gradually released by the second land 22 and the axial length of the piston groove 20 is brought in an overlapping arrangement and fluid communication with both the inlet port 10 and the outlet port 13 in response to an axial displacement of the piston 15 or piston body 16 from the first axial position, i.e. closed or off- position, to any of a plurality of axially displaced second positions of the piston 15 to enable fluid passing via the piston groove 20 from the inlet port 10 to the outlet port 13. FIG. 2 shows the fully opened state regarding the sliding piston functionality, i.e. the piston body 16 is moved to the fully open sliding valve position.

Further, as will be appreciated from the above,
- the lands 21, 22 and the first piston bar 23 define a rotary piston valve functionality, in which a free passage width between the inlet port 10 and the outlet port 13 is modifiable by the first bar 23 in response to a rotary movement of the piston 15 in response to a rotary action on the dial 5 coupled to the piston 15, i.e. piston body 16.

As may be inferred from FIG. 1 and 2, the piston 15 projects from the valve housing 11, and comprises at the first end E1, as indicated in FIG. 5, a contact surface 26 or bulge, configured for operable contact with the lever 4 for axial displacement of the piston 15, in particular the piston body 16, from the first axial position (closed or off-position, FIG. 1) to any of the second positions (open or partially open, e.g. FIG. 2) in response to the lever 4 actuating the sliding piston valve functionality. Further, the piston 15 comprises at the second end E2 a coupling section 27 configured for operable coupling with the dial 5 for rotatably moving the piston 15 in response to a rotary movement of the dial 5 to actuate the rotary piston valve functionality.

In the example shown in FIG. 1 and 2, in the first axial position, the outlet port 13 is sealingly closed by the second land 22, while the axial length of the groove 20 is in an overlapping arrangement and fluid communication with the inlet port 10. In this configuration, incoming water may flush the groove 20, while passage towards the outlet port 13 is blocked via the second land 22 and the annular seal arranged in-between the inlet port 10 and the outlet port 13. Here, and if the outer axial diameters of the lands 21, 22 and annular seals 25 are substantially the same, the piston body 16 is substantially in hydraulic or hydrostatic equilibrium, meaning that no residual axial forces are generated by incoming water pressure.

As particularly shown in FIG. 3, the piston 15 comprises a first 25.1 and a second annular seal 25.2, which are arranged, respectively, at or on the first land 22 and the second land 22, sealingly fitting, as shown in FIG. 1 and 2, the lands 21, 22 against the inner surface of the valve chamber 14 or an inner surface of the valve housing 11 in any operational axial position of the piston 15. A third annular seal 25.3, representing an intermediate annular seal, is, in the given examples, arranged at or on the second land 22 axially between the first annular seal 25.1 and the second annular seal 25.2 respectively between the inlet port 10 and the outlet port 13. The third annular seal 25.3 seals, in the first axial position of the piston 15 (FIG. 1) the inlet port 10 against the outlet port 13 to block water passage and mediate closure of the valve.

The first annular seal 25.1 and the second annular seal 25.2 seal the piston 15, i.e. piston body 16, against the valve chamber 20 to block water from leaking from the valve assembly in axial direction, i.e. parallel to the longitudinal axis A.

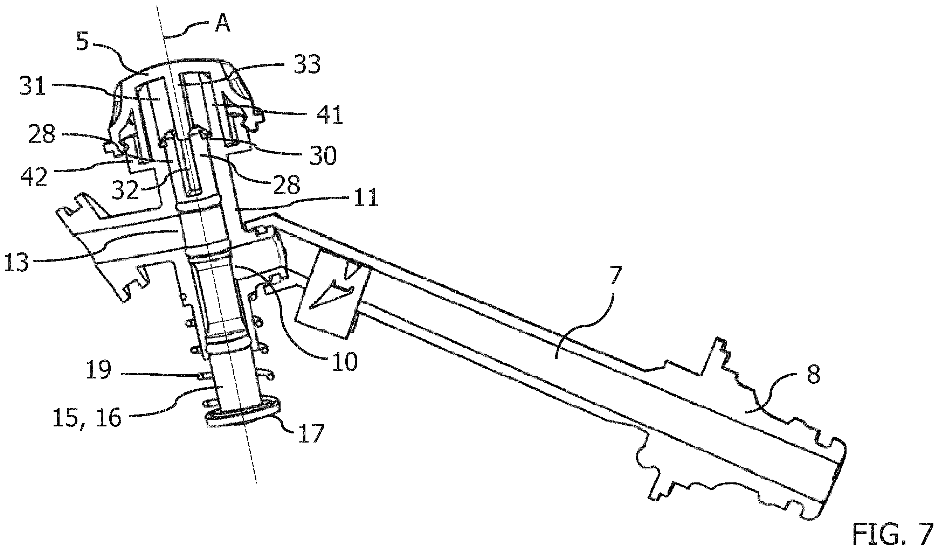

FIG. 7 shows a variant, in which the outer diameter of the first annular seal 25.1 is larger than the outer diameter of the second annular seal 25.2 and the third annular seal 25.3. With this arrangement, pressurized water entering the piston groove 20 leads to a residual hydraulic or hydrostatic force that urges the piston body 16 towards the first axial position, i.e. to the closed or off position. This means, that the residual force contributes, in addition the force generated by the spiral spring 19, to closing the valve in response to releasing the lever 4.

In the exemplary embodiments shown in FIGs. 1, 2, and 7, the spiral spring 19 is positioned outside of the water-bearing section of the valve chamber 14, particularly outside of the valve housing 11. In the given exemplary embodiments, one axial end of the spiral spring 19 is in operable contact with the flange 17 of the piston 15, that is integral with the piston body 16, and an opposite axial end of the spiral spring 19 is in operable contact with the valve housing 11. The spiral spring 19 may engage and be coaxial with an annular ring or cylindrical projection of the valve housing 11 as shown in FIGs. 1, 2, and 7.

Turning now to FIGs. 3 to 5 and 7, the valve assembly 3 comprises a latching mechanism for latching the piston 15 within the valve housing 11. Specifically, the piston 15, i.e. piston body 16, comprises, at the second end E2, i.e. the second axial end, two latching elements 28 projecting parallel to the longitudinal axis A at a distal free end of the piston body 16. Each of the latching elements 28, which may have the form of a tongue or tab, has at the distal free end a lateral latching nose 29 (FIG. 3-5) projecting in radial direction. These latching elements 28 and latching noses 29 are in operational engagement with a latching flange 30 (FIG. 7) at an inner wall of the valve housing 11. The latching flange 30 in the present example represents a latching shoulder provided as a circular ring of a bottom surface of a bore 31 extending inwardly from an axial end of the second end E2 of the valve body 11. The latching mechanism is operable to block movement of the piston 15 at the first axial position in a movement towards the first axial position while enabling movement of the valve body 16 in opposite direction. As may be inferred from FIG. 7, the piston body 16 may be installed and inserted into the valve chamber 14 from one side of the valve housing 11 or valve chamber 14 with the latching elements 28 first, until the latching noses 29 engage the latching flange 30, wherein this engagement corresponds to the first axial position of the piston 15. By this, the piston body 16 is held within the valve chamber 14 and blocked from movements in axial direction from the second end E2 o the first end E1 beyond the first axial position. Movements in opposite direction, which are required for opening the valve, are possible, wherein moving the piston body 16 into the valve housing 11 (upwards in FIG. 7) is restricted by flange 17, which abuts against the circular ring of the valve housing 11 if pushed into the valve chamber 14. The position in which the flange 17 abuts the annular ring or cylindrical projection of the valve housing 11 corresponds to the fully opened state of the valve in connection with the sliding valve functionality. Thus, once snapped in, the piston body is attached in a loss-proof manner to the valve housing 11.

As may be inferred from FIGs. 3 to 5 and 7, the second end E2 of the piston 15 comprises the two latching elements 28. These latching elements 28 have been described in connection with latching the piston 15 in the valve housing 11. These latching elements 28 provide an additional function for establishing a rotary or torque-proof coupling between the piston 15 and the dial 5. Specifically, the latching elements 28 together with a coupling groove 32 represent a first coupling structure, and the dial 5 comprises a protrusion 33 or coupling latch 33 (lug or bar) as a second coupling structure, with the two coupling structures being in mutual engagement when the dial 5 is attached to the valve housing 11 or handle grip 2 or associated components.

In the assembled state, the protrusion 33 or coupling latch 33 engages between the latching elements 28 into the latching groove 32. Due to the rectangular cross section of the coupling latch 33 and a corresponding rectangular cross section of the coupling groove 32, the protrusion 33 and the groove 32 mutually engage, to establish a form-fitting coupling, in a rotary-proof or torque-proof manner, such that a rotary movement of the dial 5 is translated into a rotary movement of the piston 15. The coupling latch 33 is arranged coaxially with the center axis of the dial 5 and, in the mounted state, coaxial with the piston 15. The coupling latch 33 engages between the latching elements 28 into the coupling groove 32, which, as an additional function, blocks the latching elements 28 from bending inwards and thereby inhibits disengagement of the latching noses 29 from the latching flange 30 in the mounted configuration. In this context, the dial 5 has a dual functionality, i.e. control for rotating the piston 15 for actuating the rotary piston functionality and for securing the piston 15 within the valve chamber 14.

As can be inferred from FIGs. 1, 2 and 7, the latching elements 28, the coupling groove 32, and the coupling latch 33 or protrusion 33 are configured such that they enable axial relative movement of the piston 15 against the dial 5. Therefore, the coupling between the latching groove 32 and the coupling latch 33 or protrusion 33 engage in all possible axial positions of the piston 15, i.e. respective elements provide a continued mutual coupling or engagement. The axial positions of the piston 15 are limited by the latching flange 30 corresponding to the first axial position (downward movement in FIG. 7; closed or off-position), and the abutment of the coupling latch 33 at the bottom of the coupling groove 32, the abutment of the latching elements 28 at the dial 5, and/or the flange 17 at the valve housing 11 (upward movement) at the fully opened position regarding the sliding piston functionality.

As can be seen from FIGs. 3 to 5 and 17, the coupling elements, i.e. the latching elements 28, the coupling groove 32, and the coupling latch 33 or protrusion 33, form a jaw-type coupling, in which the first coupling structure, i.e. the coupling groove 32, defines, at the distal free end at the second axial end E2 of the piston 15 a slotted structure comprising an axial slot defined by two opposing first jaws 28, i.e. the latching elements 28, extending in axial direction of the piston 15. The coupling groove 32 or slot is configured to receive a second jaw 33 or protrusion 33, i.e. the coupling latch 33, provided on the dial 5 extending towards and parallel to the piston 15 and engaging, when coupled to the piston 15, between the first jaws 28, i.e. the latching elements 28, into the slot 32, i.e. the coupling groove 32.

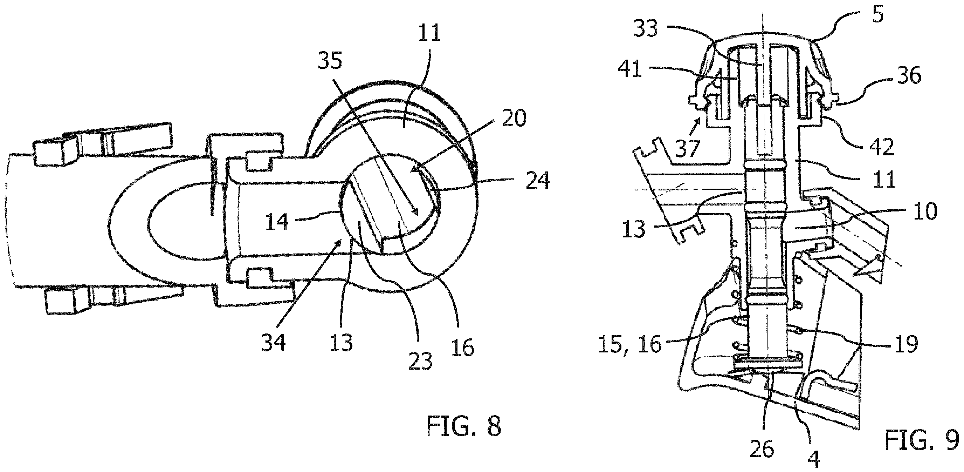

With the valve assembly shown in the figures, the piston groove 20 is formed asymmetrically with regard to the longitudinal axis A of the piston 15. One of the bars, i.e. the first piston bar 23, is positioned off-center relative to the longitudinal axis A of the piston 15. The first piston bar 23 has a form substantially corresponding to a cylinder segment extending between the lands 21, 22, with an outer cylindrical surface 34 (see FIGs. 5 and 8) of the cylinder segment of the first piston bar 23 abutting an inner cylindrical wall 35 of the valve chamber 14. As may be inferred from FIG. 8, the circumferential length of the outer cylindrical surface 34 substantially corresponds to the circumferential length of the outlet port 13, such that the outlet port 13 may be fully blocked by the first bar 23 in a corresponding rotatory position of the first bar 23 (see FIG. 8). By this, if the piston 15 is shifted from the first axial position, the outlet port 13 is may be fully blocked by the first piston bar 23 if the outer surface of the first bar 23 fully overlaps the circumferential length of the outlet port 13. Changing the rotary position of the piston bar 23 gradually releases the outlet port 13, enabling water passing from the inlet port 10 to the outlet port 13 as soon as the piston body 16 overlaps the outlet port 13.

With the water sprayer equipment 1 and valve assembly 3, an exemplary embodiment may be implemented such that the maximum cross section of all water-carrying or water-bearing parts or channels of the valve housing 11 is about 8 mm, wherein a maximum diameter of the piston 15 may be about 8 mm. The diameter of the valve chamber 14 may be at about 8 mm, and a maximum passage width of the piston groove 20, i.e. a passage width associated with a maximum pass-through cross-section of the piston groove 20, measured perpendicular to the piston axis along the longitudinal axis A, may be at about 4 mm to 5 mm. Further, an inner diameter of the inlet port 10 and/or the outlet port 13 may be in the range from 7 mm to 9 mm, preferably at about 8 mm.

As may be inferred from FIG. 9, the dial 5 is connected via a snap-in connection to the valve housing 11. Preferably, a snap-in connection is established between mutually mating snap-in structures. A first snap-in structure 36 may be provided on an outer circumferential ring element of the dial 5 with snapping teeth projecting radially inwards. A second snap-in structure may be provided on an annular flange 37, located radially inside of the outer circumferential ring of the dial 5, with a snap-in groove opening radially outwards. The snapping teeth and snap-in groove are implemented such that in the mounted state of the dial 5, the first snap-in structure 36 and the second snap-in structure mutually engage such that the dial 5 is fixed by a snap-in connection to the valve housing 14 with regard to the longitudinal direction A and is rotatable received on the valve housing 11 for actuating the rotatory piston valve functionality. In the given example, the snap-in structure is integrally formed with the dial 5 respectively the valve housing 11.

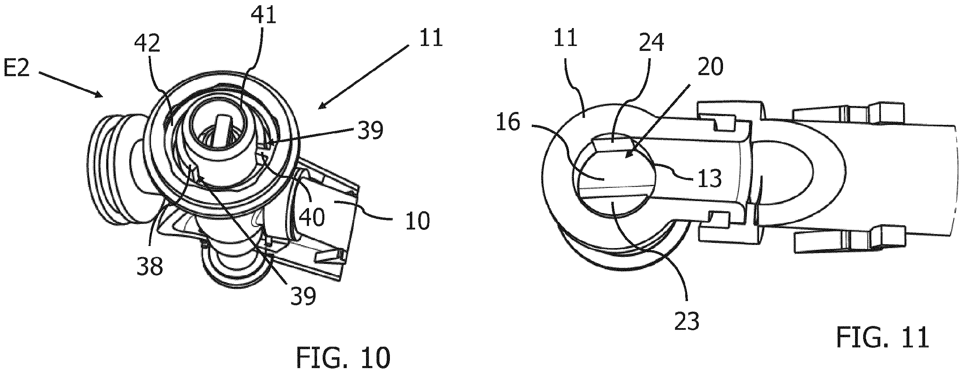

Turning now to FIG. 10, which shows in a top perspective view a detail of the valve housing 11 and the dial 5, wherein a top or outer cover of the dial 5 is omitted for illustration purposes. It is to be noted, that the dial 5 is made as a one-piece part. The dial 5 comprises, which is also visible from FIG. 6, an inner ring segment 38 with two abutment faces 39 having a circumferential orientation. A gap established in circumferential direction between the abutment faces 39 engages, in the assembled state (e.g. FIG. 10), a stop element 40 radially projecting between a first annular ring 41 and a second annular ring 42 of the valve housing 11 at the second end E2. The first annular ring 41 and the second annular ring 42 are concentric to the valve chamber 14. The second annular ring 42 is located radially outside of the first annular ring 41 and comprises the second snap-in structure 37 (e.g. FIG. 9) for rotatably latching the dial 5 to the valve housing 11 with a snap-in connection as described above.

The first annular ring 41 represents a cylindrical prolongation of the valve chamber 14, with a distal free end projecting, in the assembled state, into the ring segment 38 of the dial 5. In operation, the abutment faces 39 and the stop element 40 restrict the angle of rotation of the dial 5, in that the angle of rotation may be varied between the two extreme rotary positions of the dial 5 in which a respective abutment face 39 abuts or lies against the stop element 40. One of the extreme positions corresponds to the configuration in which the first piston bar 23 closes or, with regard to the circumferential direction, overlaps outlet port 13 as shown in FIG. 8, for example. The other extreme position corresponds to the configuration in which the first piston bar 23 does not interfere or overlap with the outlet port 13 as shown in FIG. 11. The first annular ring 41 and the second annular ring 42, and the ring segment 38 represent components for guiding the dial 5 in connection with the rotary movement relative to the valve housing 11, for snap-holding the dial 5 at the valve housing 11, and for restricting rotary movement of the dial 5.

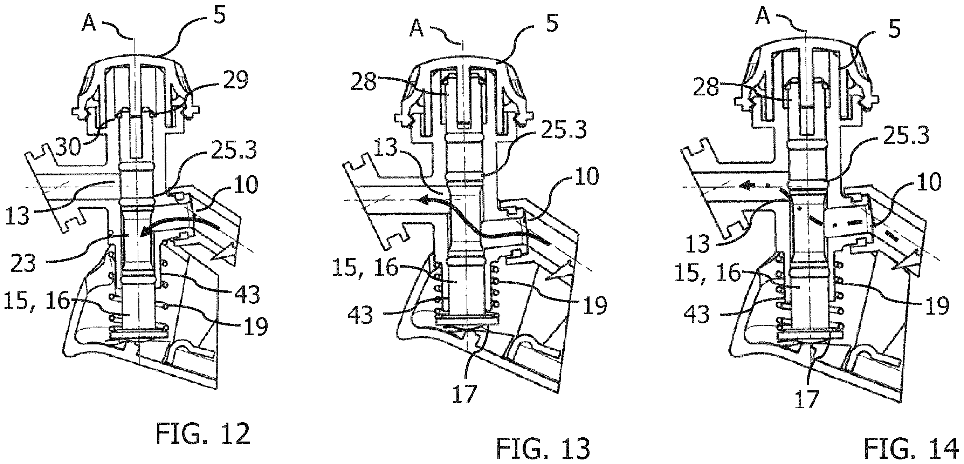

FIGs. 12 and 13 show cross sectional views of two operational conditions of the valve assembly 3. In FIG. 12, the piston body 16 is positioned in the first axial position (closed or off-position), in which the intermediate annular seal 25.3 and/or the second piston land 22 seal(s) the outlet port 13 against the inlet opening 10 to block water passing the valve assembly 3 (arrow in FIG. 12 ending in the piston chamber 20). The piston body 16 is pushed out as far as possible by the spiral spring 19 from the valve chamber 14 with regard to the longitudinal axis A, wherein the latching noses 29 engage and abut the latching flange 30. In FIG. 13, the piston body 16 is pushed, with regard to a movement parallel to the longitudinal axis A, as far as possible inwards into the valve housing 11, such that the piston groove 20 is in fluidic communication with the inlet port 13 and the outlet port 13 to enable water passing through the valve assembly 3 (arrow in FIG. 13). In the operational condition of FIG. 13, the piston body 16, in particular the flange 17, abuts against a distal annular projection 43 of the valve housing 11 delimiting the inward movement of the piston body 16. FIG. 14 shows a further operational condition, in which the piston body 16 is not fully pushed inwards, wherein the piston groove 20 slightly overlaps with the outlet port 13 with a path-through width being smaller than that of FIG. 13 but enabling water pass-through.

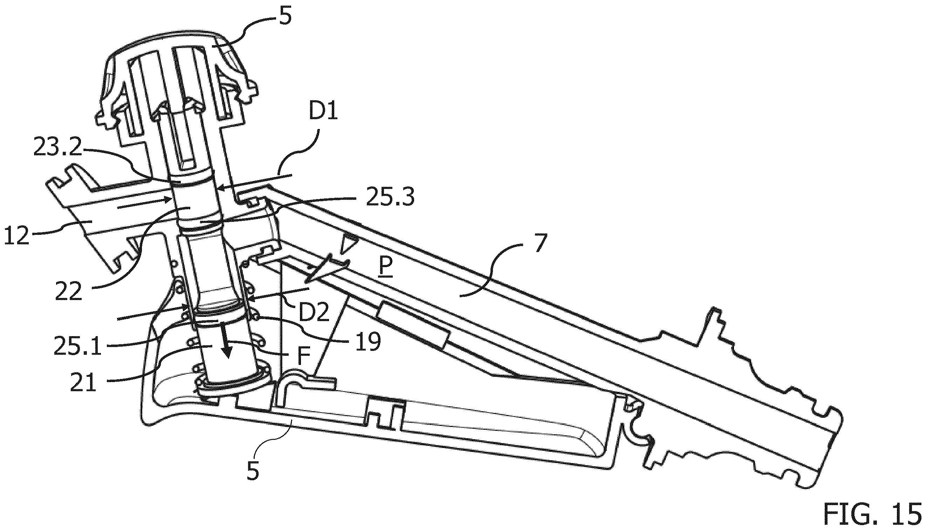

FIG. 15 shows in a cross sectional view of a variant of the valve assembly 3. In this variant, a first outer diameter D1 of the second land 22 and the associated second annular seal 25.2 and intermediate seal 25.3, substantially corresponding to a respective inner diameter of the valve chamber 14, is smaller than a second diameter D2 of the first land 21 and associated first annular seal 25.1, substantially corresponding to a respective different inner diameter of the valve chamber 14. By this, a cross-sectional area at the second land 22 is smaller than a cross-sectional area at the first land 21. This has the effect that if the valve assembly 1 is pressurized with supply water, the hydraulic or hydrostatic force generated by the supply water pressure P leads to a residual axial force F forcing the valve body 15 towards the first axial position (closed or off-position). This force F acts in addition to the biasing force generated by the spiral spring 19 to close the valve assembly 1.

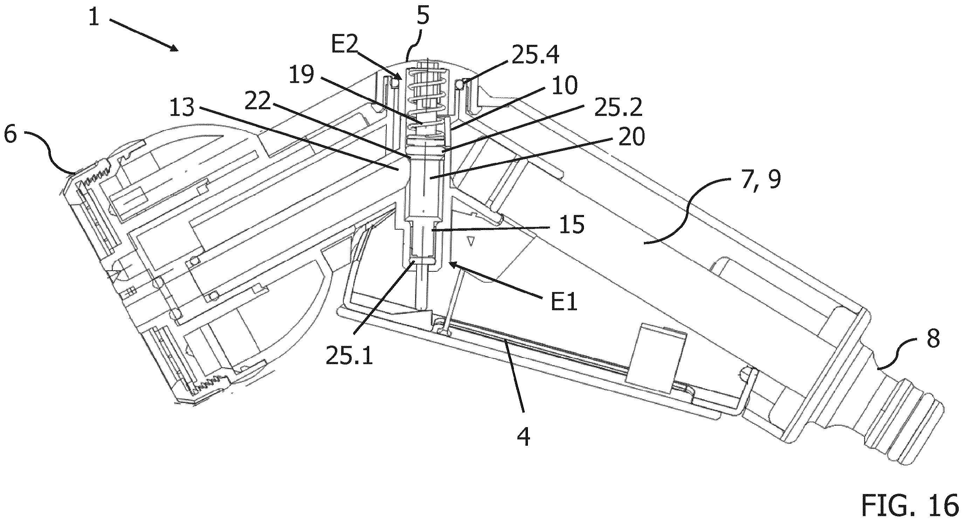

FIG. 16 shows a partial cross-sectional view of a water sprayer equipment 1 according to a variant of the valve assembly 3. In this variant, the piston 15 comprises two annular seals 25.1 and 25.2 arranged at opposite ends of the piston body 16. One annular seal 25.2 is arranged on or at a second land 22 to block and, in the first axial position, sealingly fit the piston 15 against an inner surface of the valve chamber 14. Further, the one annular seal 25.2 is arranged to block, in the first axial position, fluid from passing from the inlet port 10 to the outlet port 13. The other annular seal 25.1 is arranged at or on an opposite end, i.e. the first end E1, of the piston 15 sealingly fitting the piston 15 against the inner surface of the valve chamber 14 or an inner surface of the valve housing 11 to block water from leaking from the valve assembly 3 in axial direction.

In this variant, the spiral spring 19 is positioned within the water-bearing section of the valve chamber 14 or the valve housing 11, wherein the spiral spring 19 is arranged at the second end E2. One axial end of the spiral spring 19 is in operable contact with the piston 15, particularly in operable contact with a bearing surface of a flange or shoulder integral with the second end E2 of the piston 15. This bearing surface faces away from the piston groove 20. An opposite axial end of the spiral spring 19 bears against the dial 5, which is snap-fitted to the valve body 11. An annular seal 25.1 at the first end E1 and a further annular seal 25.4 fitted into an inner groove of the dial 5 sealingly seal the valve chamber 14 from water leaking in axial direction.

In this variant, if the piston 15 is in the first axial position (closed or off-position), water is blocked from entering the piston groove 20 and from passing towards the outlet port 13. If the piston 15 is urged by the lever 4 against the biasing force of the spiral spring 19 and moved from the first axial position (in FIG. 16 an upwards movement), the second land 22 and associated the annular seal 25.2 move in a direction from the first end E1 to the second end E2. By this, the inlet port 10 is released and water is enabled to flow into the valve chamber 14 and via the piston groove 20 to the outlet port 13. If the lever 4 is released, the piston 15 is urged by the spiral spring 19 towards the first axial position, and the valve is closed.

Except for the fact that the variant of FIG. 16 includes only two annular seals, and that the spiral spring 19 is located within the water-bearing section of the valve housing 11, the dual functionality, i.e. the sliding piston functionality and the rotary piston functionality, the attachment of the lever 4 and the dial 5 and their function and interaction with the piston 15 are provided analogously as compared to the variant shown and described in connection with FIGs. 1 to 15, and full reference is made to the above discussion and description.

In all, the exemplary embodiments described herein provide a valve assembly 3 for a water sprayer 1 or water gun, comprising a valve housing 11 comprising a tubular valve chamber 14 with an inlet port 10 and an outlet port 13, and a piston 15 with a solid piston body 16 as a valve body axially reciprocally as well as rotatably received within the valve chamber 14, a piston groove 20 of the piston 15 being delimited at its opposite axial ends E1, E2 by two piston lands 21, 22, the piston body 16 comprises at least one piston bar 23, 24 extending, between the two piston lands 21, 22; wherein the piston 15, the piston lands 21, 22, and the piston groove 20 define a sliding piston valve functionality, in which in a first axial position of the piston 15, the inlet port 10 and/or the outlet port 13 is/are sealingly closed by one of the lands 21, 22, and in which in response to an axial sliding movement of the piston 15, the inlet port 10 or the outlet port 13 is gradually released to enable fluid passing via the piston groove 20 from the inlet port 10 to the outlet port 13; and wherein the lands 21, 22 and the at least one piston bar 23, 24 define a rotary piston valve functionality, in which a free passage width between the inlet port 10 and the outlet port 13 is modifiable by at least one of the bars 23, 24 in response to a rotary movement of the piston 15.

As will be appreciated from the above, the exemplary embodiments described herein reveal that the valve assembly 3 and water sprayer equipment 1 as suggested solve the underlying objective problem.

### Reference Signs

- 1: water sprayer equipment
- 2: handle grip
- 3: valve assembly
- 4: lever
- 5: dial
- 6: spout
- 7: inflow path
- 8: quick-coupling
- 9: inflow piping
- 10: inlet port
- 11: valve housing
- 12: discharge path
- 13: outlet port
- 14: valve chamber
- 15: piston
- 16: piston body
- 17: flange
- 18: pivot joint
- 19: spiral spring
- 20: piston groove
- 21: first land
- 22: second land
- 23: first piston bar
- 24: second piston bar
- 25: annular seal
- 26: contact surface
- 27: coupling section
- 28: latching element
- 29: latching nose
- 30: latching flange
- 31: bore
- 32: coupling groove
- 33: coupling latch
- 34: outer cylindrical surface
- 35: inner cylindrical wall
- 36: first snap-in structure
- 37: second snap-in structure
- 38: ring segment
- 39: abutment face
- 40: stop element
- 41: first annular ring
- 42: second annular ring
- 43: annular projection

- A: longitudinal axis
- E1: first end
- E2: second end
- D1: first diameter
- D2: second diameter
- P: pressure
- F: force

## Claims

1. A valve assembly (3) for a water sprayer equipment (1), in particular a water sprayer or water gun, preferably of hand-held type, comprising
a valve housing comprising a tubular valve chamber (14) with an inlet port (10) and an outlet port (13), and
a cylindrical piston (15) as a valve body axially reciprocally as well as rotatably received within the valve chamber (14),
wherein the piston (15) comprises a solid piston body (16) and a piston groove (20) that is delimited at its opposite axial ends by two piston lands (21, 22) of the piston body (16) distanced from each other towards opposite first axial end (E1) and second axial end (E2) of the piston (15),
the piston body (16) comprising at least one piston bar (23, 24) extending, in axial direction between the two piston lands (21, 22), parallel to and in overlapping arrangement with the piston groove (20);
wherein
a) the piston lands (21, 22) and piston groove (20) define a sliding piston valve functionality, in which:
b) in a first axial position of the piston (15) within the valve housing (11), the inlet port (10) and/or the outlet port (13) is/are sealingly closed or sealed by one of the piston lands (21, 22) to block fluid from passing from the inlet port (10) via the piston groove (20) to the outlet port (13), and in which
c) in response to an axial sliding movement of the piston (15), the inlet port (10) or the outlet port (13) is gradually released by the piston land (21, 22) and the axial length of piston groove (20) is brought in an overlapping arrangement and fluid communication with both the inlet port (10) and the outlet port (13) in response to an axial displacement of the piston (15) from the first axial position to any of a plurality of axially displaced second positions to enable fluid passing via the piston groove (20) from the inlet port (10) to the outlet port (13);
and wherein
d) the piston lands (21, 22) and the at least one piston bar (23, 24) define a rotary piston valve functionality, in which a free passage width between the inlet port (10) and the outlet port (13) is modifiable by at least one of the piston bars (23, 24) in response to a rotary movement of the piston (15).

2. The valve assembly (3) according to claim 1,
wherein the solid piston body (16) of the piston (15) is a one-piece part made from solid material.

3. The valve assembly (3) according to any of the preceding claims,
wherein the first axial end (E1) of the piston (15) comprises a contact surface (26), preferably projecting from the valve housing (11),
the contact surface (26) being configured for operable contact with an actuating element (4), in particular lever (4), for axial displacement of the piston (15) from the first axial position to any of the second positions in response to the actuating element (4) actuating the sliding piston valve functionality, and
wherein the piston (15) comprises, preferably at the second end (E2), opposite to the first axial end (E1) of the piston (15), a coupling section (27) configured for operable coupling with a rotary control element (5), in particular a dial (5), for rotary moving the piston (15) in response to a rotary movement of the rotary control element (5) to actuate the rotary piston valve functionality.

4. The valve assembly (3) according to any of the preceding claims,
wherein in the first axial position,
- the inlet port (10) or the outlet port (13) is sealingly closed by one of the piston lands (21, 22) while the axial length of the piston groove (20) is in an overlapping arrangement and fluid communication with the outlet port (13) or the inlet port (10), respectively;
wherein preferably,
- the outlet port (13) is sealingly closed by the one of the piston lands (22), while the piston groove (20) is in an overlapping arrangement and in fluid communication with the inlet port (10); or
- the inlet port (10) is sealingly closed by the one of the piston lands (21, 22), while the piston groove (20) is in an overlapping arrangement and in fluid communication with the outlet port (13).

5. The valve assembly (3) according to any of the preceding claims,
wherein the piston (15) comprises two annular seals (25.1, 25.2) arranged at opposite ends of the piston (15),
in which a first annular seal (25.1) is arranged on or at one of the piston lands (21, 22) to block and, in the first axial position, sealingly fit the piston (15) against the inner surface of the valve chamber (14) to block, in the first axial position, fluid from passing from the inlet port (10) to the outlet port (13), and
in which a second annular seal (25.2) is arranged at or on an opposite end of the piston (15) sealingly fitting the piston (15) against the inner surface of the valve chamber (14) or an inner surface of the valve housing (11) to block water from exiting from the valve chamber (14) in axial direction.

6. The valve assembly (3) according to claim 5,
wherein, an outer axial diameter of the first annular seal (25.1) is substantially the same as an outer axial diameter of the second seal (25.2), or
wherein an outer axial diameter of the first annular seal (25.1) or the second annular seal (25.2) is smaller than an outer axial diameter of the second annular seal (25.2) or the first annular seal (25.1).

7. The valve assembly (3) according to any of claims 1 to 4,
wherein the piston (15) comprises three annular seals (25.1, 25.2, 25.3),
in which a first annular seal (25.1) and a second annular seal (25.2) are arranged, respectively, at or on one of the piston lands (21, 22) sealingly fitting the piston body (15), in particular the respective piston land (22), against the inner surface of the valve chamber (14) or an inner surface of the valve housing (11) in any operational axial position of the piston (15), and an intermediate third annular seal (25.3) arranged at or on one of the piston lands (22) and axially between the first annular seal (25.1) and the second annular seal (25.2) and between the inlet port (10) and the outlet port (13).

8. The valve assembly (3) according to claim 7,
wherein the outer diameters of the first annular seal (25.1), the second annular seal (25.2) and the third annular seal (25.3) are substantially the same, or wherein an outer axial diameter (D2) of the first annular seal (25.1) and/or the second annular seal (25.2), is larger than an outer axial diameter (D1) of the third annular seal (25.3).

9. The valve assembly (3) according to any of the preceding claims, comprising
a biasing element (19), in particular a spring, more particularly a spiral spring (19), preferably arranged coaxially with the piston (15),
wherein the biasing element (19) is configured for biasing the piston (15) towards the first axial position.

10. The valve assembly (3) according to claim 9,
wherein the biasing element (19) is positioned outside of the water-bearing section of the valve chamber (14) or the valve housing (11), and
wherein one axial end of the biasing element (19) is in operable contact with the piston (15), preferably at a flange (17) provided at, preferably integral with, a distal section of the first axial end (E1) of the piston (15) and in which an opposite axial end of the biasing element (19) is in operable contact with the valve housing (11), and/or an enclosure of the valve housing (11).

11. The valve assembly (3) according to claim 9,
wherein the biasing element (19) is positioned within the water-bearing section of the valve chamber (14) or the valve housing (11),
in which one axial end of the biasing element(19) is in operable contact with the piston (15), preferably with a bearing surface of a flange or shoulder integral with the second axial end (E2) of the piston (15), the bearing surface facing away from the first axial end (E1), and
in which an opposite axial end of the biasing element (19) is configured for bearing against the valve housing (11) or a component to be directly or indirectly fitted to the valve housing (11), in particular a rotary control element (5) for actuating the rotary piston valve functionality, an enclosure for the valve housing (11) and/or a surrounding casing for the valve housing (11).

12. The valve assembly (3) according any of the preceding claims, comprising
a latching mechanism for latching the piston (15) within the valve housing (11),
wherein the second axial end (E2) opposite to the first axial end (E1) of the piston (15) comprises one or more latching elements (28), in particular snap elements, which are, in the assembled state, in operational engagement with a latching groove or flange (30), in particular a snap groove or flange, provided at an inner wall of the valve housing (11),
wherein the latching mechanism is operable to block movement of the piston body (16) at the first axial position in a movement towards the first axial position while enabling movement of the valve body (16) in opposite direction.

13. The valve assembly (3) according any of the preceding claims,
wherein the second axial end (E2) of the piston (15) comprises one or more first coupling elements (28, 32) for establishing a rotary, in particular torque-proof, coupling with one or more second coupling elements (33) of a rotary coupling element (5), such as a dial (5), for actuating the rotary piston functionality, the first coupling element (28, 32) and the second coupling element (33) are preferably configured for establishing a form-fitting coupling between the piston (15) and the rotary coupling element (5) at the second axial end (E2),
wherein the one or more first coupling elements (28, 33) preferably enable sliding movement of the piston (15) relative to the one or more second coupling elements (33) in axial direction of the piston (15) such that the piston (15) is axially moveable from the first axial position in direction of the second end (E2) under continued mutual engagement of the one or more first coupling elements (28, 32) and the one or more second coupling elements (33).

14. The valve assembly (3) according to claim 13,
wherein the one or more first coupling elements (28, 32) and the one or more second coupling elements (33) are configured to form a jaw-type coupling, wherein, preferably, the one or more first coupling elements (28, 32) define, at the distal free end at the second axial end (E2) of the piston (15) a slotted structure comprising an axial slot (32) defined by two opposing first jaws (28) extending in axial direction of the piston (15),
wherein the slot (32) is configured to receive a protrusion (33) provided on the rotary control element (5) extending towards and parallel to the piston (15) and engaging, when coupled to the piston (15), between the first jaws (18) into the slot (32).

15. The valve assembly (3) according to claims 12 and 14,
wherein at least one latching nose (29) is integrally formed at a distal free end of at least one of the first jaws (28), preferably at each of the first jaws (28), on a lateral side averted from the slot (32), the latching nose (29) forming the latching elements, and
wherein, in the first axial position of the piston (15), the at least one latching nose (29) engages a latching groove or flange (30), the latching groove or flange (30) arranged concentrically to the valve chamber (14),
wherein the first jaws (28) are preferably flexible with regard to movements perpendicular to a longitudinal piston axis (A) such that the piston (15) is insertable into the valve chamber (14) with the first jaws (28) first from a side of the valve chamber (14) averted from the latching groove or flange (30), the first jaws (28) being deflected towards the longitudinal piston axis (A) during insertion and snap the latching nose (29) into the latching groove or flange (30) once reaching the first axial position.

16. The valve assembly (3) according any of the preceding claims,
wherein:
- the groove (20) is formed asymmetrically with regard to a longitudinal piston axis (A) of the piston 15();
- at least one of the piston bars (23, 24) is positioned off-center relative to the longitudinal piston axis (A) of the piston (15),
- at least one of the piston bars (23, 24) has a substantially rectangular axial cross section and laterally extends between and to opposing inner sides of the valve chamber (14), and/or
- at least one of the piston bars (23, 24) has a form substantially corresponding to a cylinder segment extending between the piston lands (21, 22), with an outer cylindrical surface of the cylinder segment abutting an inner cylindrical wall of the valve chamber (14),
wherein a circumferential length of the outer cylindrical surface substantially corresponds to a circumferential width of the inlet port (10) and/or the outlet port (13).

17. The valve assembly (3) according any of the preceding claims,
wherein
- a maximum cross section of all water-carrying parts or channels of the valve housing (10) is in the range from 7 mm to 9 mm, preferably at about 8 mm; and/or
- a maximum diameter of the piston (15) is about 6 mm to 9 mm, preferably at about 8 mm; and/or
- a diameter of the valve chamber (14) is in the range from 6 mm to 9 mm, preferably at about 8 mm; and/or
- a maximum passage width of the piston groove (20), i.e. a passage width associated with a maximum pass-through cross-section, measured perpendicular to the longitudinal piston axis (A) is in the range between 3 mm to 6 mm, preferably at about 4 mm to 5 mm; and/or
- an inner diameter of the inlet port (10) is in the range from 7 mm to 9 mm, preferably at about 8 mm.

18. A water sprayer equipment (1), such as an irrigation or watering device, water sprayer gun, irrigation or watering syringe or shower, in particular of hand-held type,
comprising:
a) an inflow path (7) and a discharge path (12) for supplying and discharging liquid, in particular water, to and from the water sprayer equipment (1);
b) a valve assembly (3) according to any of claims 1 to 17 for controlling liquid passage from the inflow path (7) to the discharge path (12);
c) a handle grip (2),
d) an actuating element (4), in particular a lever (4), and a rotary control element (5), in particular a dial (5), attached to the handle grip (2) for manually actuating the valve assembly (3) and controlling flow and/or flow rate through the equipment (1),
wherein the actuating element (4) is coupled to the piston (15) for actuating the sliding piston valve functionality, and the rotary control element (5) is coupled to the piston (15) for actuating the rotary piston valve functionality.

19. The water sprayer equipment (1) according to claim 18,
wherein the actuating element (4) is in operable contact with a contact surface (26) formed at the first axial end (E1) of the piston (15), and
wherein the rotary control element (5) is coupled with the second axial end (E2) of the piston (15) opposite to the first axial end (E1) of the piston (15).

20. The water sprayer equipment (1) according to any of claims 18 and 19, wherein the actuating element (4) is pivotally coupled to the handle grip (2) and/or a housing associated with the inflow path (7) via a pivot joint (18), and a contact portion of the actuating element (4) is in operable contact with the piston (15), wherein the pivot joint (18) and the contact portion (26) are preferably arranged at opposite ends of the actuating element (4), with the pivot joint (18) preferably located towards an inflow opening of the inflow path (7) and, further preferably the actuating element (4) extends from the pivot joint (18) in a direction towards the outflow path (12) and/or the valve assembly (3).

21. The water sprayer equipment (1) according to any of claims 18 to 20, wherein the actuating element (4) is located, in the region of the inflow path (7) or associated inflow piping (9), on a first long side of the handle grip (2), and wherein the rotary control element (5) is located at an opposing second long side at the handle grip (2),
wherein the handle grip (2) and the rotary control element (5) are preferably arranged such that, when a user grasps or holds the handle grip (2) for ordinary manual use of the water sprayer equipment (1), the second long side rests against the palm of the user's hand, while the actuating element (4) at the first long side is operable by the user's fingers grasping the handle grip (2).

22. The water sprayer equipment (1) according to any of claims 18 to 21 comprising a valve assembly (3) according to 11,
wherein the opposite axial end of the biasing element (19) bears against or engages a bearing structure, in particular a flange, of the rotary control element (5), facing the valve housing (11), the bearing structure preferably formed as a circumferential groove.

23. The water sprayer equipment (1) according any of the claims 18 to 22, wherein the rotary control element (5) is rotatably connected to the handle grip (2) and/or the valve housing (11) at a side averted from the actuating element (4), wherein the rotary control element (5) preferably comprises a first snap-in structure (36), preferably provided on or at a cylindrical projection,
wherein the first snap-in structure (36) projects towards the valve housing (11), and
wherein the first snap-in structure (36) engages a second snap-in structure (37), preferably at or on a cylindrical projection (42), wherein the cylindrical projection (42) is provided at the valve housing (11) and coaxial with the valve chamber (14),
wherein the rotary control element (5) is preferably connected via a snap-in connection to the valve housing (14),
wherein the snap-in connection preferably is established between mutually mating snap-in elements provided, on the one hand, circumferentially at an inner or outer face of an radially outer annular ring that is integral with the rotary control element (5) and, on the other hand, circumferentially at an outer or inner face or groove of an annular flange (42) that is integral with the valve body (11), formed at a component associated with the valve body (11), and/or the handle grip (2).
